# EUROPÄISCHE PATENTSCHRIFT

(11) **EP 2 839 146 B1**
(45) Veröffentlichungstag und Bekanntmachung des Hinweises auf die Patenterteilung: **21.06.2017**
(21) Anmeldenummer: 12805907.8
(22) Anmeldetag: 16.11.2012
(51) Int. Cl.: F03D 1/02, F03D 1/06, F03D 1/04

(54) **WINDKRAFTANLAGE**
WIND TURBINE
ÉOLIENNE

(30) Priorität: 17.11.2011 AT 17092011
(43) Veröffentlichungstag der Anmeldung: 25.02.2015
(73) Patentinhaber: Wieser, Gudrun, 4521 Schiedlberg (AT)
(72) Erfinder: WIESER, Gerhard, A-4521 Schiedlberg (AT)
(86) Internationale Anmeldenummer: PCT/AT2012/050179
(87) Internationale Veröffentlichungsnummer: WO 2013/071328

(56) Entgegenhaltungen:
- WO-A1-2010/108196
- WO-A2-2010/131052
- DE-B1- 2 949 447
- DE-C- 804 090
- US-A1- 2010 316 487
- US-A1- 2011 037 268
- US-A1- 2011 103 955

## Beschreibung

### Technisches Gebiet

Die Erfindung bezieht sich auf eine Windkraftanlage zur Energiegewinnung mit einem axial durchströmten, auf einer Welle drehbar gelagerten, rotierenden wirbelbildenden Windkonzentrator, der einen ringförmigen Außenmantel aufweist, an dessen Außenseite auf 360° verteilt Leiteinrichtungen angeordnet sind und der zwischen der Welle und dem ringförmigen Außenmantel mit kreisförmig verteilten Konzentratorblättern ausgestattet ist (WO 02/057625 A1).

### Stand der Technik

Die bekannte Vorrichtung ist an ihrem Außenmantel mit einem Vortexgenerator ausgestattet, weist aber in Summe eine sehr aufwändige, turbinenartige Bauweise auf. Im Übrigen ist die Nutzung der im Wind enthaltenen kinetischen Energie ist mit verschiedenen Systemen möglich.

Die bekannten Windkraftanlagen besitzen meist propellerartige Laufräder, die zur Erzeugung von Energie in bzw. entgegen der Windrichtung auftriebsnutzend ausgerichtet werden. Die propellerartigen Windkraftanlagen besitzen allerdings den Nachteil, dass ihre Wirtschaftlichkeit insbesondere bei kleinen Windgeschwindigkeiten und bei kleineren Durchmessern auf Grundlage des betz'schen Gesetz äußerst gering ist. Des Weiteren ist allseits bekannt, dass die propellerartigen Windkraftanlagen sehr hohe Lärmpegel verursachen, und für kleinere Hausanlagen in bewohnten Gebieten die Lärmpegelrichtlinien überschreiten. Ebenso benötigen propellerartige Laufräder entsprechende Nabenhöhen, da die nutzbare Energiedichte und deren Energieinhalt des Luftstromes mit Zunahme der Größe der Rotorblätter über den gesamten überstreichenden Querschnitt stark variiert.

Um dies zu verbessern ist es bekannt (EP 1415089) die Luftströmung über ein axial durchströmtes Laufrad mit einer höheren Energiedichte mit erhöhtem Energieinhalt zuzuführen, und die kinetische Energie des natürlichen Windes in elektrische Energie umzuwandeln.

Das axial durchströmte, auf einer drehbar gelagerten Welle mit Laufschaufeln versehenen Laufrad verfügt eine die Luftströmung axial beschleunigende Leiteinrichtung. Diese bekannte Windkraftanlage kann durch die axiale Luftströmung den Strömungsanteil eines am Standort gegebenen Windes vorteilhafter nutzen, und somit die kinetische Energie dieser Luftströmung im Zulässigkeitsbereich des betz'schen Gesetzes durch die beschleunigende Leiteinrichtung mit verbessertem Wirkungsgrad nutzbar machen, und in Folge in elektrische Energie umwandeln.

Ebenso ist bekannt, dass die Windströmung umso mehr gebremst wird, je ausgeprägter die Rauhigkeit des Bodens ist. Eine weitere Tatsache liegt in der bezeichneten Windscherung je Standort zugrunde, welche besagt, dass die Windgeschwindigkeit abnimmt, je weiter man sich dem Boden nähert. Diese Gegebenheiten machen sich je näher dem Boden in böenartigen bis turbulenten Windaufkommen bemerkbar, welche die Rauhigkeitslängen nachteilig belasten, und den Energieinhalt des Luftstromes stark reduzieren. Nähere Details zu diesen Bedingungen finden sich im Handbuch Guidlines for Design of Wind Turbines von Risoe National Laboratory. Das Dokument WO2010/131052 offenbart eine Windkraftanlage mit den Merkmalen des Oberbegriffs des Anspruchs 1. Darstellung der Erfindung Der Erfindung liegt somit die Aufgabe zugrunde, diese Mängel zu beseitigen, und eine einfache und effiziente Windkraftanlage der eingangs geschilderten Art bereitzustellen, welche die zur Verfügung stehende Windenergie mit verbessertem Wirkungsgrad nutzt und insbesondere den Wind dem durchströmten, rotierenden und wirbelbildenden Windkonzentrator mit verbesserten Rauhigkeitslängen und erhöhtem Energieinhalt bei sämtlichen nutzbaren Windgeschwindigkeiten zuführt.

Die Erfindung löst die Aufgabe dadurch, dass die Leiteinrichtungen sägezahnförmige, gekrümmte Leitprofile umfassen, die Randwirbel generieren, welche über den gesamten Querschnitt des ringförmigen Außenmantels stromabwärts eine Wirbelspule bewirken. Insbesondere generieren die am Außenmantel angeordneten, auf 360 Grad verteilten, sägezahnförmigen und sich in Strömungsrichtung eindrehenden, gekrümmten Leitprofile Randwirbel hinter dem Windkonzentrator, die sich an den Leitprofilen ablösen.

Diese Randwirbel fließen in der Strömung mit, und beginnen durch gegenseitige Induktion stromab spiralförmig umeinander zu rotieren und bilden stromabwärts eine Wirbelspule, welche hinter dem Windkonzentrator ein Konzentratorauge mit kräftigen Unterdruck über den gesamten Querschnitt des ringförmigen Außenmantels ausbildet.

Im Inneren dieser Wirbelspule bildet sich eine erhöhte Strömungsgeschwindigkeit, die hinter dem Windkonzentrator eine Herabsetzung des örtlichen Druckes bewirkt, so dass die Leistung des rotierenden Windkonzentrators aufgrund des vergrößerten Druckgefälles gesteigert werden kann.

Aus der Strömungstechnik ist es bekannt, das sich Unterdruck auch in angrenzend entfernte Bereiche fortsetzt, und somit auch die Luftströmung in dem beschriebenen Windkonzentrator über die Konzentratorblätter erhöht, was auch eine erhöhte Energieleistung bewirkt, da ein größerer Massendurchsatz erzwungen wird.

Der erfindungsgemäße, wirbelbildende Windkonzentrator mit sägezahnförmigen in sich eindrehenden, gekrümmten Leitprofilen, welche der ringförmigen Ummantelung auf 360 Grad verteilt, in kreisförmiger Anordnung nachgeordnet sind, bewirken stromabwärts neben der Wirbelspulenbildung, welche hinter dem Windkonzentrator ein Konzentratorauge mit kräftigen Unterdruck über den gesamten Querschnitt des ringförmigen Außenmantels ausbildet, vorteilhafterweise auch eine Strömungsbeschleunigung und Drehmomenterhöhung an der Windkraftanlagenwelle bei sämtlichen Windgeschwindigkeiten. Dies führt zu verbesserten Rauhigkeitslängen und bewirkt unter anderem eine Glättung von windkraftbedingten Kurzzeitschwankungen in der Antriebsdrehzahl zwischen Windböen. Dazu können die Leitprofile in Profillängsrichtung und gegebenenfalls um eine Profillängsachse gekrümmt sein.

Damit erhöht sich die elektrische Energieausbeute pro m2 überstrichene Fläche durch die auf den rotierenden wirbelbildenden Windkonzentrator verstärkt wirkenden Auftriebskräfte, welche sich ebenso verstärkt auf das Drehmoment und somit die tatsächliche Leistung pro m2 überstrichene Fläche auswirken. Dies ergibt eine früheres Anlaufen der Windkraftanlage bei geringeren Windstärken und wirkt sich in Folge auf die Leistungskurve bei sämtlichen nutzbaren Windgeschwindigkeiten vorteilhaft aus.

Zudem oder alternativ kann der Außenmantel mit Leitprofilen in der Form von Flügelenden mit angeformten Winglets ausgestattet sein, die ein besonders gutes und berechenbares Wirbelablöseverhalten aufweisen.

Um das Strömungsverhalten, den Antrieb und die Wirbelablösung insbesondere auch bei geringen Windgeschwindigkeiten zu verbessern, können der Außenmantel, die Leitprofile und gegebenenfalls die Winglets einen Tragflächenquerschnitt aufweisen.

Diese wirbelbildenden, sich gegen die Drehrichtung in sich eindrehenden, gekrümmten Leitprofile können auch bei feststehenden Ummantelungen von Turbinen und Rotoren eingesetzt werden.

In einer weiteren Ausgestaltungsform kann dieser erfindungsgemäße Windkonzentrator durch motorischen Antrieb auch als Ventilator-Konzentrator vortriebserzeugend Verwendung finden. Bei dieser Anwendungsform bildet sich stromaufwärts eine Unterdruckzone aus, welche sich stromabwärts auch in angrenzend entfernte lokale Bereiche des Windkonzentrators durch den Sogeffekt fortsetzt und den Energiebedarf für den motorischen Antrieb durch die Herabsetzung des örtlichen Druckes gegenüber herkömmlichen Ventilatoren zum Stand der Technik reduziert. Gemäß der Erfindung wird der Wirkungsgrad der erfindungsgemäßen Windkraftanlage noch weiter gesteigert bzw. die zur Verfügung stehende Windenergie noch besser genutzt, indem dem rotierenden Windkonzentrator ein auf einer Zusatzwelle sitzenden, axial durchströmten Hilfskonzentrator nachgeordnet wird, wobei Wind- und Hilfskonzentrator mit einer horizontal durchlaufenden ring- oder diffusorförmigen feststehenden Ummantelung umgeben sind.

Wird eine zusätzliche Erhöhung der Windgeschwindigkeit in der horizontal verlaufenden, ring- oder diffusorförmigen feststehenden Ummantelung angestrebt, ist es vorteilhaft, wenn diese windeintrittsseitig als Düsenform verengend ausgeführt ist, und an der Austrittseite sich diese lavaldüsenförmig erweitert.

Um bedarfsweise entweder den Windkonzentrator oder den Hilfskonzentrator im Betrieb als Leiteinrichtung für den jeweils anderen Windkonzentrator einsetzen zu können, ist dem Windkonzentrator und /oder dem Hilfskonzentrator eine Bremsvorrichtung zugeordnet, mit der entweder der eine oder der andere Windkonzentrator bis zum Stillstand abgebremst werden kann.

Die erfindungsgemäße Windkraftanlage mit rotierenden wirbelbildenden Windkonzentrator ist entweder mit gegen den Wind ausgerichteten horizontaler Drehachse als Luv- oder Lee-Läufer auf einem Masten mit Drehkranzverbindung oder dergleichen angeordnet. Gleichermaßen wird ebenso der in Reihe geschaltene Windkonzentrator mit einem nachgeordneten Hilfskonzentrator mit horizontal verlaufender, feststehender ring-, diffusor- oder lavaldüsenförmiger Ummantelung auf einem Mast mit Drehkranzverbindung oder dergleichen vorgesehen.

Ist eine solare Nutzung der erfindungsgemäßen Windkraftanlage gewünscht, wird der vertikallaufende wirbelbildende Windkonzentrator mit biegsamen dünnschichtigen Solarpanellen zur Solarenergienutzung ausgestattet. Die Beschichtung mit biegsamen Solarpanellen erstreckt sich sowohl auf den Windkonzentrator, den kreisförmig angeordneten wirbelbildenden Leitprofilen, als auch der horizontal verlaufenden feststehenden ring-, diffusor- oder lavaldüsenförmigen Ummantelung oder Teilen davon.

Die aus den Solarpanellen gewonnene Wärmeenergie wird abgeleitet und in elektrische Energie umgewandelt. Durch die Solarpaneelen erfolgt eine Abkühlung der Windkonzentratorflächen durch die Ableitung der Wärmeenergie, dadurch wird zusätzlich der Luftstrom in den Strömungskanälen abgekühlt, wodurch sich das spezifische Gewicht der Luft und damit auch die Energieeffizienz erhöht. Allseits ist auch bekannt, dass sich auf Solarpanellen wesentlich später Eis bilden, bzw. Schnee anlegen kann.

Als weitere Nutzungsmöglichkeit der erfindungsgemäßen Windkraftanlage wird die Ausscheidung von Anteilen des in der Luftfeuchtigkeit enthaltenen Wassers des zuerst axial, spiralförmig eingeleiteten Luftstromes in die horizontal verlaufende, feststehende lavaldüsenförmige Ummantelung vorgeschlagen, welche sich in Windeintrittsrichtung zuerst verengt, und im Anschluß an Ihre Verjüngung Richtung Windaustrittsseite wieder erweitert,.

Durch die spiralförmig eingeleitete Luftströmung in der horizontal verlaufenden lavaldüsenförmigen Ummantelung wird zwischen den beiden Windkonzentratoren der Luftstrom abgekühlt, wodurch Wasser am Boden der Ummantelung abgeschieden wird. Dieser dem Luftstrom entzogene Wasseranteil soll in Wasserauffangbehälter gesammelt, und wirtschaftlich für Bewässerung und andere technische Einsatzgebiete genutzt werden. Das Wasser kann sowohl unterirdisch -, oder durch Abpumpen in überirdischen Wasserauffangbecken gesammelt werden.

Wird eine weitere Abkühlung der durchströmenden Luftströmung in der horizontal verlaufenden, lavaldüsenförmigen Ummantelung angestrebt, um dieser einen höheren Anteil des in der Luftfeuchtigkeit enthaltenen Wasseranteils zu entziehen, wird vorgeschlagen, den Windkonzentrator an der Windeintrittsseite wie auch die lavaldüsenförmige Ummantelung über eingebaute Kühldrähte und/oder Kühlschlangen oder dergleichen nach Bedarf entsprechend zu kühlen. Solche Kühldrähte und/oder Kühlschlangen können auch parallel, netzgitterförmig zwischen den beiden Windkonzentratoren angeordnet sein.

Um die Vorrichtung zur Wasserausscheidung aus der Luftströmung auch bei Windstille bzw. sehr schwacher Windströmung einsetzen zu können, wird einer der in Reihe angeordnete Windkonzentratoren in der insbesondere horizontal verlaufenden lavaldüsenförmigen Ummantelung durch motorischen Antrieb über den Generator als Ventilator vortriebserzeugend angetrieben. Wahlweise wird entweder der Windkonzentrator oder der Hilfswindkonzentrator motorisch als Ventilator betrieben, wodurch sich diese die Luftströmung stromaufwärts vortriebserzeugend ansaugen.

### Kurze Beschreibung der Zeichnungen:

Die Erfindung ist in der Zeichnung anhand eines Ausführungsbeispiels schematisch dargestellt. Es zeigen:
- Fig. 1: eine Windkraftanlage mit rotierenden wirbelbildenden Windkonzentrator in Vorderansicht als Luv Läufer.
- Fig. 2: eine Windkraftanlage mit rotierenden wirbelbildenden Windkonzentrator in Seitenansicht als Luv Läufer.
- Fig. 3: eine Ausgestaltungsvariante der erfindungsmäßigen Windkraftanlage mit rotierenden wirbelbildenden Windkonzentrator mit nachgeordneten, auf einer Zusatzwelle parallellaufenden Hilfskonzentrator in horizontal verlaufender feststehender lavaldüsenförmiger Ummantelung in teilgeschnittener Seitenansicht mit eingebauten Kühldrähten und Wasserauffangbecken.
- Fig. 4: bis 6 eine Ausgestaltungsform der auf 360 Grad kreisförmig angeordneten, sägezahnförmigen in sich eindrehenden, gekrümmten Leitprofile gegen die Drehrichtung mit verschiedenen Ansichten.
- Fig.7: bis 12 weitere Ausführungsbeispiele der auf 360 Grad kreisförmig angeordneten wirbelbildenden und strömungsverdichtenden in sich eindrehenden, gekrümmten Leitprofilen gegen die Drehrichtung mit verschiedenen Ansichten und

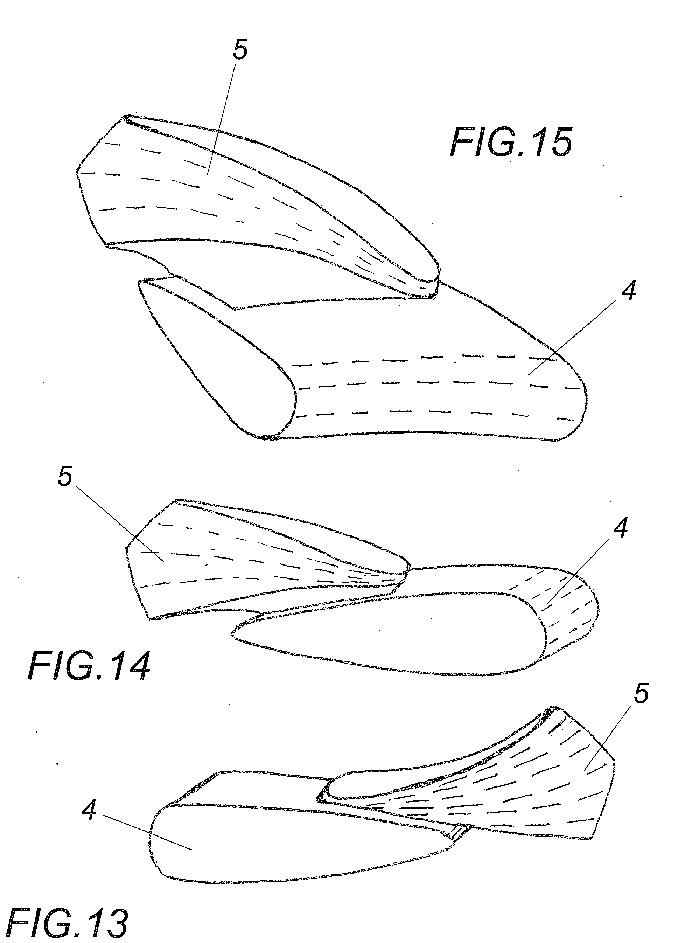

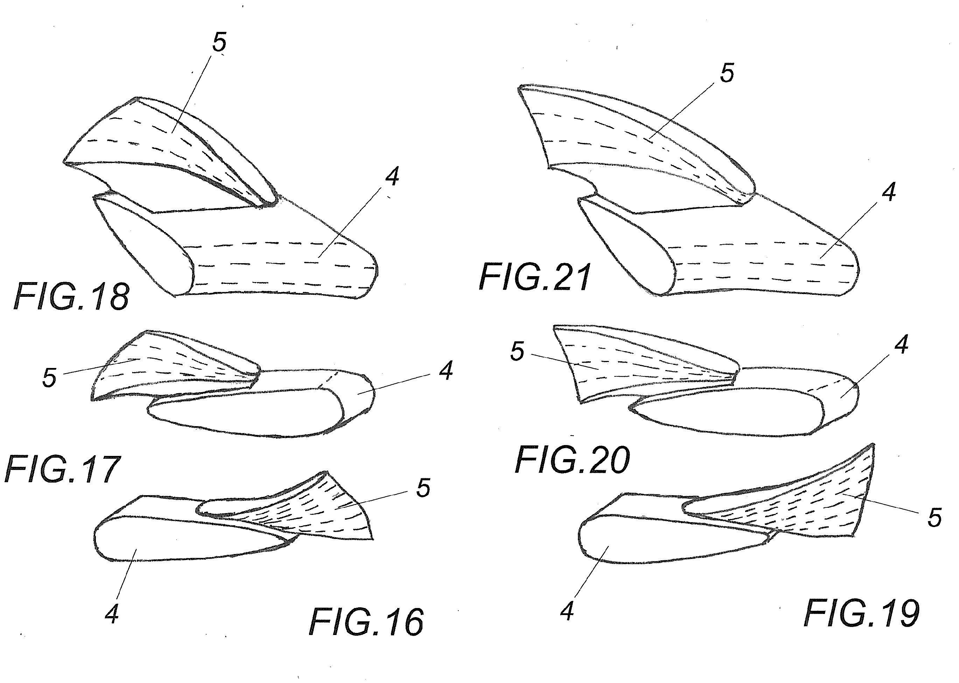

- Fig. 13: bis 21 Konstruktionsvarianten der Ausführungsbeispiele nach den Fig. 4 - 12 mit einen Tragflächenquerschnitt aufweisenden Leitprofilen.

### Wege zur Ausführung der Erfindung

Eine Windkraftanlage 1 zur Energiegewinnung mit rotierenden wirbelbildenden Windkonzentrator 2 besteht im Wesentlichen aus einem axial durchströmten, auf einer Welle 3 drehbar gelagerten rotierenden Windkonzentrator 2, der über einen ringförmigen Außenmantel 4 verfügt, um die Luftströmung über den gesamten angeströmten Querschnitt nutzen zu können.

An der Außenseite des ringförmigen umschließenden Außenmantels 4 befinden sich auf 360 Grad verteilt, kreisförmig befestigte, in sich eindrehende strömungsverdichtende und wirbelbildende Leiteinrichtungen, die sägezahnförmige in sich gegen die Drehrichtung eindrehende, gekrümmte Leitprofile 5 besitzen, welche sich in Strömungsrichtung erweitern (im Querschnitt verbreitern) können.

Der Windkonzentrator 2 ist zwischen Nabe 6 und ringförmigen Außenmantel 4 mit um die Nabe 6 kreisförmig, strahlenförmig, angeordneten Konzentratorblättern 7 je nach Einsatzzweck mit Niedriggeschwindigkeitsprofilen oder mit Hochgeschwindigkeitsprofilen ausgestattet. Unter Niedriggeschwindigkeitsprofilen werden in diesem Zusammenhang Tragflächenprofile Verstanden, die auf geringe Anströmgeschwindigkeiten ausgelegt sind. Demnach sind Hochgeschwindigkeitsprofile auf höhere bzw. hohe Anströmgeschwindigkeiten ausgelegt.

Diese wirbelbildenden Leitprofile 5 sollen der anströmenden Luftströmung Randwirbel aufzwingen, welche sich hinter dem Windkonzentrator 2 zu einer Wirbelspule über dem gesamten Querschnitt des durchströmten Windkonzentrators 2 vereinigen. Im Inneren dieser Wirbelspule bildet sich eine erhöhte Zirkulation, welche in ihrem Inneren einen Geschwindigkeitszuwachs und somit Unterdruck erzeugt. In der eingeschlossenen Kreisringfläche hinter dem Windkonzentrator 2, dem Konzentratorauge erfolgt über den gesamten Querschnitt des ringförmigen Außenmantels eine Reduzierung des örtlichen Druckes. Bedingt durch den niedrigen Druck im Wirbelkern wird durch den Windkonzentrator 2 hindurch Luft aus der Umgebung stromaufwärts angesaugt, da in einem lokalen Unterdruck die Moleküle mit Molekulargeschwindigkeit fließen und somit den Effekt selbstständiger Beschleunigung aufweisen. Diese Beschleunigung führt zu verbesserten Rauhigkeitslängen mit erhöhten Energieinhalt der Luftströmung, und bewirken eine Glättung der Kurzzeitschwankungen des Windes zwischen den Windböen.

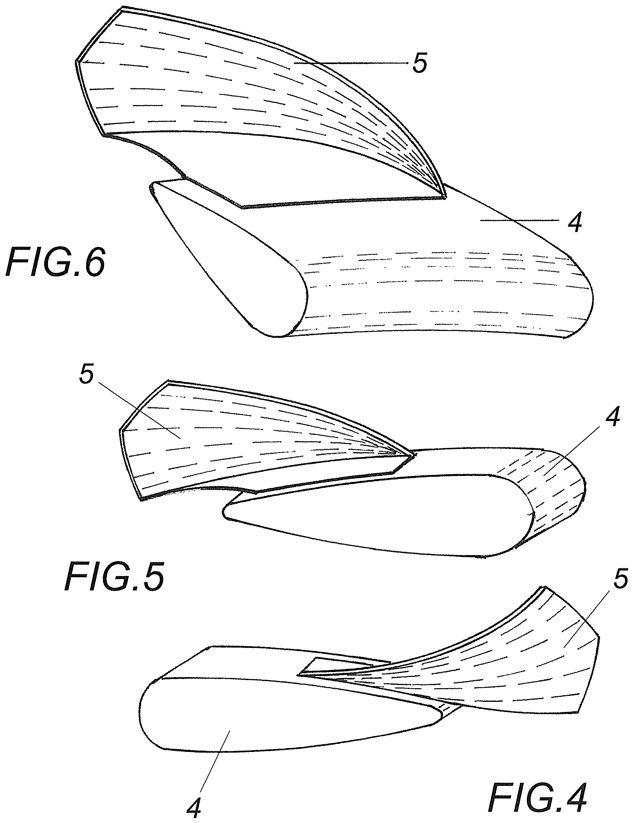

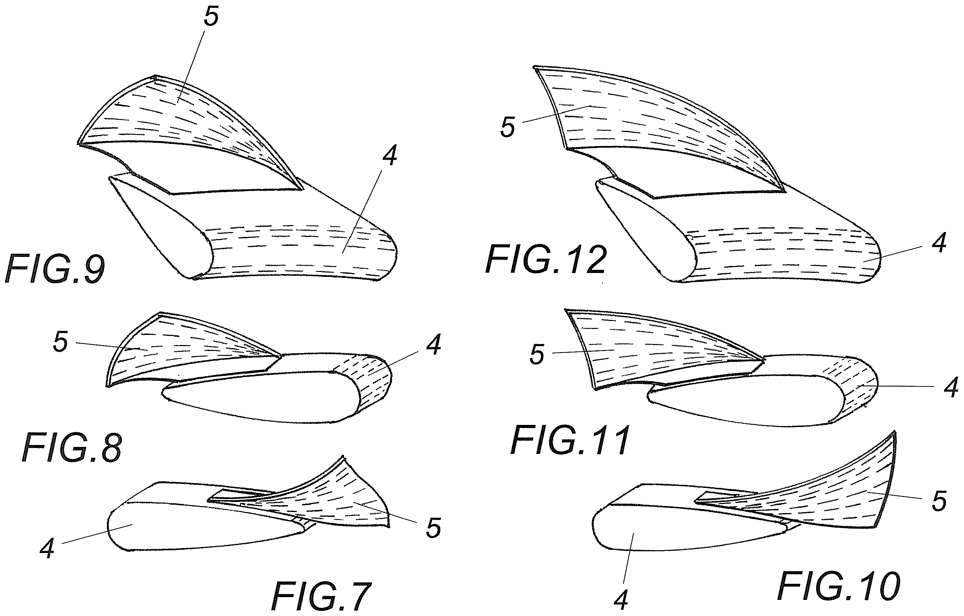

Wie in den Ausführungsbeispielen (Fig. 4 bis 12) angeführt, können die wirbelbildenden in sich eindrehenden, gekrümmten Leitprofile 5 am Profilende verschiedene Auslauf-Gestaltungsformen aufweisen und können auch gegen eine Federkraft oder durch den Einsatz von biegsamen Materialien mit der Windströmung verstellbar ausgeführt sein.

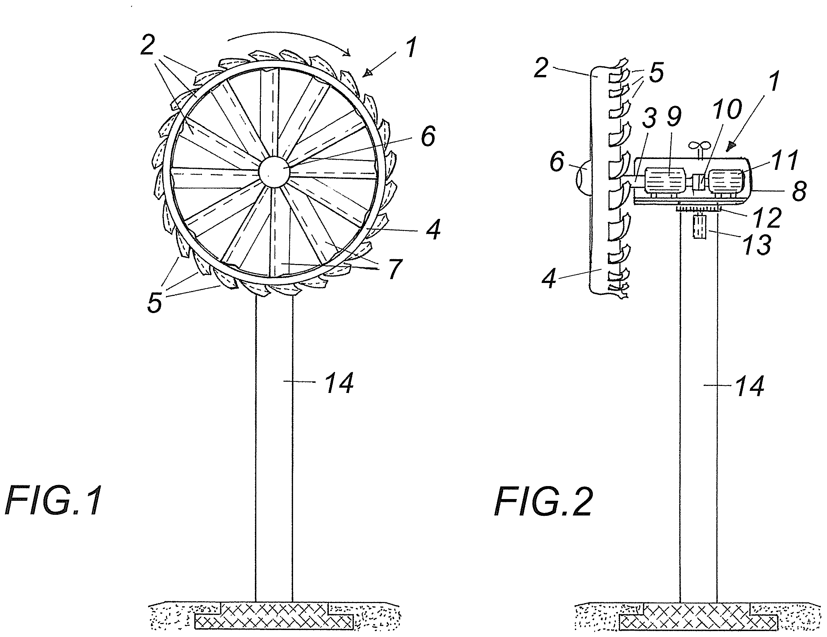

Der Windkonzentrator 2 ist auf der Welle 3 befestigt, die in einem Gehäuse 8 drehbar gelagert und über ein Getriebe 9 und Kupplung 10 an einen Generator 11 angeschlossen ist, wodurch die Windenergie in elektrische Energie umgesetzt wird. Die Windnachführung der Windkraftanlage 1 erfolgt mittels eines in den Drehkranz 12 eingreifenden Elektromotors 13. Nach den (Fig. 1 und 2) ist die erfindungsgemäße Windkraftanlage 1 auf einem Stahlrohrmast 14 montiert. Der Windkonzentrator 2 besitzt koaxial zur Welle 3 einen mittleren Verdrängungskörper der gleichzeitig eine Nabe 6 zur Aufnahme des Windkonzentrators 2 ausbildet und die Luftströmung aus dem inneren Turbinenbereich, in dem die Nutzwirkung aufgrund des geringen Abstandes zur Drehachse sehr klein wäre, den weiter außen liegenden Turbinenbereich zuleitet, wodurch sich der Staudruck vor dem Windkonzentrator 2 und in Folge die Auftriebskraft der Konzentratorblätter an den Niedriggeschwindigkeitsprofilen zusätzlich erhöht.

Mit Ausgestaltungsvariante für eine solare Nutzung kann der vertikallaufende Windkonzentrator 2 selbst, und die wirbelbildenden gekrümmten Leitprofile 5 mit biegsamen dünnschichtigen Solarpaneelen zur Solarenergienutzung ausgestattet werden. Der aus den Solarpaneelen gewonnene Solarstrom wird abgeleitet und in elektrische Energie umgewandelt.

Der Windkonzentrator 2 kann über dessen Generator 11 auch motorisch als Ventilator-Windkonzentrator 2 vortriebserzeugend angetrieben werden, sodass stromaufwärts eine Unterdruckzone durch die Herabsetzung des örtlichen Druckes entsteht, welcher sich stromabwärts auch in angrenzende lokale Bereiche des motorisch betriebenen Ventilator-Windkonzentrators durch den Sogeffekt fortsetzt, wodurch der Wirkungsgrad verbessert wird.

In einer weiteren Ausgestaltungsform der erfindungsgemäßen Windkraftanlage 1 kann dem Windkonzentrator 2 ein auf einer Zusatzwelle 15 sitzendes, ebenso wie der Windkonzentrator 2 axial durchströmter Hilfswindkonzentrator 16 zur besseren Ausnutzung der Windenergie nachgeordnet sein. Der Hilfswindkonzentrator 16 treibt ebenso einen Generator 11 an. Beide Windkonzentratoren 2 und 16 sind von einer feststehenden ring-, oder diffusorförmigen Ummantelung 17 umgeben.

Vorteilhaft ist es, wenn die Ummantelung 17 lavaldüsenförmige ausgeführt ist, und sich von der Windeintrittsseite in Richtung des Windkonzentrators 2 in Strömungsrichtung düsenförmig verengt, und strömungsabwärts nach dem Hilfskonzentrator 16 in Richtung der Windaustrittsseite wieder diffusorförmig erweitert.

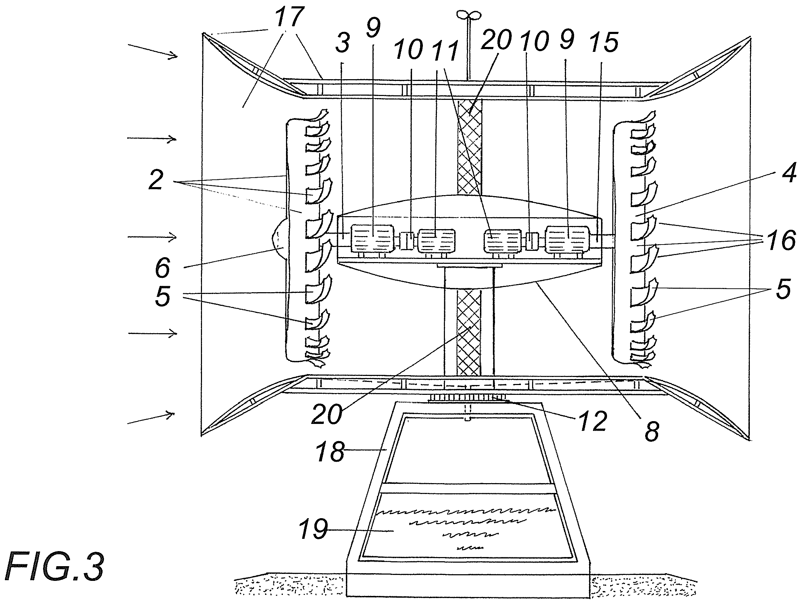

Die Windnachführung der Windkraftanlage 1 bei parallel angeordneten Windkonzentratoren 2 und 16 erfolgt auch mittels eines in den Drehkranz 12 eingreifenden Elektromotors 13. Nach der (Fig. 3) ist die erfindungsgemäße Windkraftanlage 1 auf einem Gittermast 18 montiert.

Mit Ausgestaltungsvariante für eine solare Nutzung kann die ring-, diffusor- oder lavaldüsenförmige Ummantelung 17 der in Reihe vertikallaufenden Windkonzentratoren 2 und 16 der erfindungsgemäßen Windkraftanlage 1 mit biegsamen dünnschichtigen Solarpanellen zur Solarenergienutzung ausgestattet werden. Der aus den Solarpanellen gewonnene Solarstrom wird abgeleitet und in elektrische Energie umgewandelt.

Eine weitere Ausgestaltungsvariante der erfindungsgemäßen Windkraftanlage 1 zur Ausführung nach Fig. 3 ermöglicht die Wasserausscheidung von Anteilen des in der Luftfeuchtigkeit enthaltenen Wassers des in die ring-, diffusor- oder lavaldüsenförmige Ummantelung 17eingeleiteten Luftstromes. Zwischen dem Windkonzentrator 2 und dem Hilfswindkonzentrator 16 wird der Luftstrom in der ring-, diffusor- oder lavaldüsenförmigen Ummantelung abgekühlt, wodurch Wasser abgeschieden wird. Dieses dem Luftstrom entzogene Wasser kann in Wasserauffangbehälter 19 gesammelt, und wirtschaftlich genutzt werden.

Als weitere Ausgestaltungsform für eine verstärkte Abkühlung des Luftstromes für die Wasserausscheidung aus der Luftfeuchtigkeit wird vorgeschlagen, den Windkonzentrator 2 stromaufwärts, und/oder auch die ring-, diffusor- oder lava-Idüsenförmige Ummantelung 17 mit eingebauten Kühldrähten 20 oder Kühlschlangen zu versehen, welche auch parallel, netzgitterförmig zwischen den parallel in Reihe laufenden Windkonzentrator 2 und dem Hilfskonzentrator 16 angeordnet sein können.

Die erfindungsgemäße Windkraftanlage 1 gemäß Fig. 3 kann auch über den Windkonzentrator 2 oder den Hilfskonzentrator 16 über dessen Generator 11 auch motorisch angetrieben werden, um bei Windstille oder sehr schwachen Wind auch die Einsatzmöglichkeit der Wasserausscheidung aus der Luftströmung zu ermöglichen. In solcher Ausgestaltungsform wird entweder der Windkonzentrator 2 oder der Hilfskonzentrator 16 als Ventilator-Konzentrator 2 oder 16 vortriebserzeugend betrieben.

Die Leitprofile nach den Fig. 4 - 12 weisen einen Tragflächenquerschnitt auf, um den Auftrieb (Drehantrieb) und die Wirbelablösung bei geringen Windgeschwindigkeiten zu verbessern.

## Patentansprüche

1. Windkraftanlage (1) zur Energiegewinnung mit einem axial durchströmten, auf einer Welle (3) drehbar gelagerten, rotierenden wirbelbildenden Windkonzentrator (2), der einen ringförmigen Außenmantel (4) aufweist, an dessen Außenseite auf 360° verteilt Leiteinrichtungen angeordnet sind und der zwischen der Welle (3) und dem ringförmigen Außenmantel (4) mit kreisförmig verteilten Konzentratorblättern (7) ausgestattet ist, **dadurch gekennzeichnet, dass** dem Windkonzentrator (2) ein auf einer Zusatzwelle (15) sitzender axial durchströmter Hilfswindkonzentrator (16) nachgeordnet ist, dass beide Windkonzentratoren (2, 16) auf je einer horizontalen Achse (13, 15) gelagert und mit einer feststehenden, vorzugsweise horizontal verlaufenden, ring-, diffusor- oder lavaldüsenförmigen Ummantelung (17) umgeben sind und dass die Leiteinrichtungen sägezahnförmige, gekrümmte Leitprofile (5) umfassen, die Randwirbel generieren, welche über den gesamten Querschnitt des ringförmigen Außenmantels(4) stromabwärts eine Wirbelspule bewirken.

2. Windkraftanlage (1) nach Anspruch 1, **dadurch gekennzeichnet, dass** dem Windkonzentrator (2) und/oder dem Hilfskonzentrator (16) eine Bremseinrichtung zugeordnet ist.

3. Windkraftanlage (1) nach Anspruch 1 oder 2, **dadurch gekennzeichnet, dass** biegsame dünnschichtige Solarpanelle für die Beschichtung einer horizontal verlaufenden, feststehenden ring-, diffusor- oder lavaldüsenförmigen Ummantelung (17) vorgesehen sind, und diese durch eine Wärmeabführung eine Abkühlung der Oberflächen der feststehenden ring-, diffusor- oder lava-Idüsenförmigen Ummantelung (17) und eine Abkühlung der axial durchströmenden Luftströmung bewirken.

4. Windkraftanlage (1) nach einem der Ansprüche 1 bis 3 **dadurch gekennzeichnet, dass** die durch die Abkühlung des Luftstromes ausgeschiedenen Anteile des in der Luftfeuchtigkeit enthaltenen Wassers am Boden der horizontal verlaufenden, feststehenden ring-, diffusor- oder lavaldüsenförmiger Ummantelung (17) abgeleitet, und vorzugsweise in einem Wasserauffangbecken (19) gesammelt wird.

5. Windkraftanlage (1) nach einem der Ansprüche 1 bis 4 **dadurch gekennzeichnet, dass** im Windkonzentrator (2), insbesondere auch in der vorzugsweise horizontal verlaufenden feststehenden ring-, diffusor- oder lavaldüsenförmigen Ummantelung (17) Kühldrähte (20) und/oder Kühlschlangen (20) angeordnet sind, welche netzgitterförmig ausgebildet und zwischen dem Windkonzentrator (2) und dem Hilfswindkonzentrator (16) angeordnet sind, und diese durch die Abkühlung der ausgestatteten Oberflächen eine erhöhte Abkühlung der axial durchströmenden Luftströmung bewirken.

6. Windkraftanlage (1) nach einem der Ansprüche 1 bis 5 **dadurch gekennzeichnet, dass** der Windkonzentrator (2) oder der Hilfskonzentrator (16) über den Generator (11) motorisch als Ventilator-Windkonzentrator (2 oder 16) vortriebserzeugend antreibbar ist, und die Anlage somit auch bei Windstille und bei schwachem Wind zu einer Wasserausscheidung aus der Luftströmung als Luftentfeuchter einsetzbar ist.

7. Windkraftanlage (1) nach einem der Ansprüche 1 bis, 6 **dadurch gekennzeichnet dass** biegsame dünnschichtige Solarpaneele für die Beschichtung des Windkonzentrators (2) vorgesehen sind, und diese eine Abkühlung der Oberflächen des Windkonzentrators (2) durch Wärmeabführung und eine Abkühlung der axial durchströmenden Luftströmung bewirken.

## Claims

1. Wind power plant (1) for the production of energy with an axial throughflow comprising a rotating eddy forming wind concentrator (2) on a rotatable shaft (3) with a ring-shaped outer casing (4) on the external side of which 360° distributed control facilities are arranged and equipped with circularly distributed concentrator blades (7) between the shaft (3) and the ring-shaped outer casing (4), wherein the wind concentrator (2) is downstream of an auxiliary axial flow wind concentrator (16) located on an additional shaft (15) so that both wind concentrators (2, 16) are each placed on one horizontal axis (13, 15) and surrounded by a fixed, preferably horizontal, ring, diffuser or Laval nozzle-shaped casing (17) and, in that the control equipment is comprised of saw tooth-shaped, curved guide profiles (5) that generate the marginal eddy which produces a downstream eddy coil effect across the entire cross-section of the ring-shaped external casing (4).

2. Wind power plant (1) according to claim 1, wherein the wind concentrator (2) and/or the auxiliary concentrator (16) A has an associated braking system.

3. Wind power plant (1) according to claim 1 or 2, wherein flexible thin-layered solar panels are provided for the coating of a horizontal, fixed ring, diffuser or Laval nozzle-shaped sheath (17) and these, through heat transfer, enable cooling of the fixed ring, diffuser or Laval nozzle-shaped casing surfaces (17) and cooling of the axial air flow.

4. Wind power plant (1) according to one of claims 1-3, wherein the cooling of the air flow means that the excreted parts of the water contained in the air humidity at the bottom of the horizontal fixed ring, diffuser or Laval nozzle-shaped casing (17) are drained away and preferably, collected in a water reservoir (19).

5. Wind power plant (1) according to one of claims 1-4, wherein the wind concentrator (2), and particularly, also in the preferably horizontal fixed ring, diffuser or Laval nozzle-shaped casing (17), cooling wires (20) and/or cooling coils (20) are arranged between the wind concentrator (2) and the auxiliary wind concentrator (16) to create a grid-type network which produces cooling of the provided surfaces through increased cooling of the axial air throughflow.

6. Wind power plant (1) according to one of claims 1-5, wherein the wind concentrator (2) or the auxiliary concentrator (16) can be propulsion controlled by the motor of the generator (11) as a fan wind concentrator (2 or 16) and the plant can therefore also be used as a dehumidifier for water elimination from the air flow when there is no or little wind.

7. Wind power plant (1) according to one of claims 1-6, wherein flexible thin-layer solar panels are provided for the coating of the wind concentrator (2), and this has the effect of cooling the surfaces of the wind concentrator (2) through heat dissipation and cooling of the axial air throughflow.

## Revendications

1. Eolienne (1) pour la production d'énergie comprenant un concentrateur de vent rotatif à écoulement axial (2) pivotant sur un arbre (3), générant des tourbillons, revêtu d'une enveloppe extérieure annulaire (4) dont la face extérieure est munie sur 360° de dispositifs de guidage, et qui est équipé entre l'arbre (3) et l'enveloppe extérieure annulaire (4), d'aubes de concentrateur (7) réparties de façon circulaire, **caractérisée par le fait que** le concentrateur de vent (2) dispose en aval d'un concentrateur de vent auxiliaire à écoulement axial (16) porté par un arbre supplémentaire (15), que les deux concentrateurs de vent (2, 16) sont montés chacun sur un axe horizontal (13, 15) et sont entourés d'une enveloppe fixe, de préférence horizontale, en forme d'anneau, de diffuseur ou de tuyère de Laval (17), et que les dispositifs de guidage comprennent des profils de guidage incurvés en forme de dent de scie (5) qui génèrent des tourbillons marginaux lesquels produisent, en aval, un vortex sur la section complète de l'enveloppe extérieure annulaire (4).

2. Eolienne (1) suivant la revendication 1, **caractérisée en ce que** le concentrateur de vent (2) et/ou le concentrateur auxiliaire (16) dispose(nt) d'un dispositif de freinage.

3. Eolienne (1) suivant la revendication 1 ou 2, **caractérisée par le fait que** des panneaux solaires flexibles à couches minces sont prévus pour le revêtement d'une enveloppe disposée horizontalement, fixe, en forme d'anneau, de diffuseur ou de tuyère de Laval (17) et que ceux-ci génèrent par une évacuation de chaleur un refroidissement des surfaces de l'enveloppe fixe en forme d'anneau, de diffuseur ou de tuyère de Laval (17), et un refroidissement de l'écoulement d'air axial.

4. Eolienne (1) suivant l'une des revendications de 1 à 3 **caractérisée en ce que** une fraction de l'eau contenue dans l'humidité de l'air, extraite par le refroidissement de l'écoulement d'air, est évacuée au fond de l'enveloppe horizontale, fixe, en forme d'anneau, de diffuseur ou de tuyère de Laval (17), et collectée de préférence dans un bac de réception d'eau (19).

5. Eolienne (1) suivant l'une des revendications de 1 à 4 **caractérisée en ce que** dans le concentrateur de vent (2), et notamment dans l'enveloppe de préférence horizontale, fixe, en forme d'anneau, de diffuseur ou de tuyère Laval (17) sont placés des fils de refroidissement (20) et/ou des serpentins de refroidissement (20), lesquels sont agencés en grille et placés entre le concentrateur de vent (2) et le concentrateur de vent auxiliaire (16), et lesquels produisent par le refroidissement des surfaces équipées, un refroidissement supérieur de l'écoulement d'air axial.

6. Eolienne (1) suivant l'une de revendications de 1 à 5 **caractérisée en ce que** le concentrateur de vent (2) ou le concentrateur auxiliaire (16) peut être entraîné de façon motorisée générant une propulsion via le générateur (11) comme ventilateur - concentrateur de vent (2 ou 16) et que par ce fait, même en absence de vent ou à faible vent, le dispositif est également opérationnel pour extraire de l'eau de l'écoulement d'air comme déshumidificateur.

7. Eolienne (1) suivant l'une des revendications de 1 à 6 **caractérisée en ce que** des panneaux solaires flexibles à couche mince sont prévus pour le revêtement du concentrateur de vent (2), lesquels produisent un refroidissement des surfaces du concentrateur de vent (2) par évacuation de la chaleur et un refroidissement de l'écoulement d'air axial.
